# EUROPEAN PATENT APPLICATION

(11) **EP 4 507 391 A1**
(43) Date of publication of application: **12.02.2025**
(21) Application number: 22936136.5
(22) Date of filing: 07.04.2022
(51) Int. Cl.: H04W 52/02

(54) **METHOD AND DEVICE FOR TRANSMITTING WAKE-UP SIGNAL POWER INFORMATION, AND READABLE STORAGE MEDIUM**

(71) Applicant: Beijing Xiaomi Mobile Software Co., Ltd., Beijing 100085 (CN)
(72) Inventor: FU, Ting, Beijing 100085 (CN)
(74) Representative: Dehns Germany Partnerschaft mbB
(86) International application number: PCT/CN2022/085569
(87) International publication number: WO 2023/193193

(57) **Abstract**

The present disclosure provides a method and device for transmitting wake-up signal power information and a readable storage medium, and is applied to the technical field of wireless communication. The method comprises: receiving power configuration information sent by a first network device, the power configuration information being used for indicating power information of a low-power wake-up signal, and the low-power wake-up signal being received by a set receiver of a user equipment. In the present disclosure, power configuration information of a low-power wake-up signal corresponding to an LPWUS receiver is sent to a user equipment, so that the user equipment can know power configuration conditions of the low-power wake-up signal corresponding to the LPWUS receiver, and then the user equipment determines, according to the power configuration information and known the sensitivity of LPWUS reception when a primary receiver is in an operating state, when the primary receiver is started up, thus a user can more accurately control the start up and shut down of the primary receiver and the LPWUS receiver, thereby reducing the power consumption of the user equipment.

## Description

### TECHNICAL FILED

The present disclosure relates to the field of wireless communication technology, and in particular, to a method and device for transmitting power information of a wake-up signal, and a readable storage medium.

### BACKGROUND

In some wireless communication technologies, a low power (LP) wake up signal (WUS) can be applied. When applying a low-power wake-up signal (LPWUS), the LPWUS corresponds to a separate receiver which can be referred to as a LPWUS receiver. User equipment (UE) uses a main transceiver to process uplink data and downlink data, and uses the separate receiver to receive the LPWUS. For example, when the main transceiver of the user equipment is in a sleep state, the main transceiver will be turned on after the LPWUS is received through the separate receiver corresponding to the LP WUS, so that the main transceiver will be in an operating state; when the main transceiver of the user equipment is in the sleep state, the main transceiver will be kept in the sleep state if no LPWUS is received by the separate receiver corresponding to the WUS, or if the LPWUS is received but the LPWUS indicates that there is no wakeup.

The LPWUS receiver needs to receive a synchronization signal to maintain the local clock. Considering that the reception sensitivity of the LP WUS receiver is lower than the reception sensitivity of the main receiver, e.g., the main receiver has a reception sensitivity of -11OdBm while the LPWUS receiver has a reception sensitivity of -80dBm, a coverage enhancement is required for the low-power wake-up signal corresponding to the LP WUS receiver.

### SUMMARY

The present disclosure provides a method and device for transmitting power information of a wake-up signal, and a readable storage medium.

In a first aspect, a method for transmitting power information of a wake-up signal, performed by a user device, is provided, the method including:
receiving power configuration information from a first network device, where the power configuration information is configured to indicate power information for a low-power wake-up signal, the low-power wake-up signal being received by a set receiver of the user device.

In some possible implementations, receiving the power configuration information from the first network device includes:
receiving a system message broadcast by the first network device, the system message including the power configuration information.

In some possible implementations, the power information is a power offset of the low-power wake-up signal with respect to a synchronization signal block (SSB).

In some possible implementations, the power information is a positive difference between power of the low-power wake-up signal and power of a synchronization signal block (SSB), the power of the low-power wake-up signal being greater than the power of the SSB.

In some possible implementations, the method further includes:
receiving time-domain configuration information from the first network device, where the time-domain configuration information includes information for indicating a number of repeated transmissions of the low-power wake-up signal.

In some possible implementations, a plurality of repetitions of the low-power wake-up signal are continuous in time domain.

In some possible implementations, the method further includes:
receiving frequency-domain position configuration information from the first network device, where the frequency-domain position configuration information is configured to indicate a frequency-domain position of the low-power wake-up signal.

In a second aspect, a method for transmitting power information of a wake-up signal, performed by a first network device, is provided, the method including:
sending power configuration information to a user device, where the power configuration information is configured to indicate power information for a low-power wake-up signal, the low-power wake-up signal being received by a set receiver of the user device.

In some possible implementations, sending the power configuration information to the user device includes:
broadcasting a system message, the system message including the power configuration information.

In some possible implementations, the power information is a power offset of the low-power wake-up signal with respect to a synchronization signal block (SSB).

In some possible implementations, the power information is a positive difference between power of the low-power wake-up signal and power of a synchronization signal block (SSB), the power of the low-power wake-up signal being greater than the power of the SSB.

In some possible implementations, the method further includes:
sending time-domain configuration information to the user device, where the time-domain configuration information includes information for indicating a number of repeated transmissions of the low-power wake-up signal.

In some possible implementations, a plurality of repetitions of the low-power wake-up signal are continuous in time domain.

In some possible implementations, the method further includes:
sending frequency-domain position configuration information to the user device, where the frequency-domain position configuration information is configured to indicate a frequency-domain position of the low-power wake-up signal.

In some possible implementations, the method further includes:
sending the frequency-domain position configuration information to a second network device.

In a third aspect, a communication device is provided. The communication device can be used to perform steps performed by a user device in the first aspect described above or in any of the possible designs of the first aspect. The user device can implement each of the functions in each of the above methods in the form of a hardware structure, a software module, or a hardware structure combined with a software module.

In implementing the communication device shown in the first aspect by means of a software module, the communication device may include a transceiver module.

The transceiver module is configured to receive power configuration information from a first network device, where the power configuration information is configured to indicate power information for a low-power wake-up signal, the low-power wake-up signal being received by a set receiver of the user device.

In a fourth aspect, a communication device is provided. The communication device can be used to perform steps performed by a network device in the second aspect above or in any of the possible designs of the second aspect. The network device can implement each of the functions in each of the above methods in the form of a hardware structure, a software module, or a hardware structure combined with a software module.

In implementing the communication device shown in the second aspect by means of a software module, the communication device may include a transceiver module.

The transceiver module is configured to send power configuration information to a user device, where the power configuration information is configured to indicate power information for a low-power wake-up signal, the low-power wake-up signal being received by a set receiver of the user device.

In a fifth aspect, a communication device, including a processor and a memory, is provided. The memory is configured to store a computer program. The processor is configured to execute the computer program to implement the first aspect or any of the possible designs of the first aspect.

In a sixth aspect, a communication device, including a processor and a memory, is provided. The memory is configured to store a computer program. The processor is configured to execute the computer program to implement the second aspect or any of the possible designs of the second aspect.

In a seventh aspect, a computer-readable storage medium is provided. The computer-readable storage medium has stored therein instructions (or called a computer program or a program) which, when invoked for execution on a computer, cause the computer to execute the first aspect described above or any of the possible designs of the first aspect.

In an eighth aspect, a computer-readable storage medium is provided. The computer-readable storage medium has stored therein instructions (or called a computer program or a program) which, when invoked for execution on a computer, cause the computer to execute the second aspect described above or any of the possible designs of the second aspect.

In the present disclosure, the user device is informed of the power configuration status of the low-power wake-up signal corresponding to the LPWUS receiver. This allows the user device to determine, based on this power configuration information and the known sensitivity of the LPWUS receiver, the timing to turn on the LPWUS receiver when the main receiver is in the operating state, which enables the user device to more accurately control the turning on and off of the main receiver and the LPWUS receiver, thereby saving the power consumption of the user device. In addition, when the LPWUS signal is sent repeatedly in the time domain and the power of the LPWUS wake-up signal is greater than the power of the SSB, it can overcome the problem of a small coverage area of the LPWUS receiver due to the sensitivity of the LPWUS receiver being lower than that of the main receiver, which effectively increases the coverage area of the wake-up signal for the LPWUS receiver and improves the coverage performance of the wake-up signal.

It should be understood that the above general description and the following detailed description are exemplary and explanatory only and do not limit the present disclosure.

### BRIEF DESCRIPTION OF THE DRAWINGS

The accompanying drawings illustrated herein are used to provide a further understanding of the embodiments of the present disclosure and form part of the present application. The schematic embodiments of the present disclosure and their illustrations are used to explain the embodiments of the present disclosure and do not constitute an undue limitation of the embodiments of the present disclosure. In the accompanying drawings:
The accompanying drawings herein, which are incorporated into and form a part of the specification, illustrate embodiments consistent with embodiments of the present disclosure and are used in conjunction with the specification to explain the principles of embodiments of the present disclosure.
FIG. 1 is a schematic diagram of a wireless communication system architecture provided by embodiments of the present disclosure.
FIG. 2 is a flowchart of a method for transmitting power information of a low-power wake-up signal illustrated according to an exemplary embodiment.
FIG. 3 is a flowchart of a method for transmitting power information of a low-power wake-up signal illustrated according to an exemplary embodiment.
FIG. 4 is a flowchart of a method for transmitting power information of a low-power wake-up signal illustrated according to an exemplary embodiment.
FIG. 5 is a flowchart of a method for receiving power information of a low-power wake-up signal illustrated according to an exemplary embodiment.
FIG. 6 is a flowchart of a method for receiving power information of a low-power wake-up signal illustrated according to an exemplary embodiment.
FIG. 7 is a flowchart of a method for receiving power information of a low-power wake-up signal illustrated according to an exemplary embodiment.
FIG. 8 is a flowchart of a method for sending power information of a low-power wake-up signal illustrated according to an exemplary embodiment.
FIG. 9 is a flowchart of a method for sending power information of a low-power wake-up signal illustrated according to an exemplary embodiment.
FIG. 10 is a flowchart of a method for sending power information of a low-power wake-up signal illustrated according to an exemplary embodiment.
FIG. 11 is a flowchart of a method for sending power information of a low-power wake-up signal illustrated according to an exemplary embodiment.
FIG. 12 is a structural diagram of a device for receiving power information of a low-power wake-up signal illustrated according to an exemplary embodiment.
FIG. 13 is a structural diagram of a device for receiving power information of a low-power wake-up signal illustrated according to an exemplary embodiment.
FIG. 14 is a structural diagram of a device for sending power information of a low-power wake-up signal illustrated according to an exemplary embodiment.
FIG. 15 is a structural diagram of a device for sending power information of a low-power wake-up signal illustrated according to an exemplary embodiment.

### DETAILED DESCRIPTION

Embodiments of the present disclosure are further described in connection with the accompanying drawings and specific embodiments.

Exemplary embodiments will be described herein in detail, examples of which are represented in the accompanying drawings. When the following description relates to the accompanying drawings, the same numerals in the different accompanying drawings indicate the same or similar elements unless otherwise indicated. The implementations described in the following exemplary embodiments do not represent all implementations consistent with embodiments of the present disclosure. Rather, they are only examples of devices and methods consistent with some aspects of the present disclosure as detailed in the appended claims.

Terms used in this disclosure are used solely for the purpose of describing particular embodiments and are not intended to limit this disclosure. The singular forms "a/an" and "this" as used in this disclosure and in the appended claims are also intended to encompass the plural form, unless the context clearly indicates otherwise. It should also be understood that the term "and/or" as used herein refers to and encompasses any or all possible combinations of one or more of the associated listed items.

It should be understood that while the terms "first", "second", "third", etc. may be employed in embodiments of the present disclosure to describe various types of information, such information should not be limited by these terms. These terms are only used to distinguish the same type of information from one another. For example, without departing from the scope of embodiments of the present disclosure, first information may also be referred to as second information, and similarly, second information may be referred to as first information. Depending on the context, the words "if" and "in case of" as used herein may be interpreted as "at the time of... " or "when... " or "in response to determining... ".

Embodiments of the present disclosure are described in detail below, examples of which are shown in the accompanying drawings, wherein the same or similar symbols throughout indicate the same or similar elements. The embodiments described below by reference to the accompanying drawings are exemplary and are intended to be used to explain the present disclosure and are not to be construed as limiting the present disclosure.

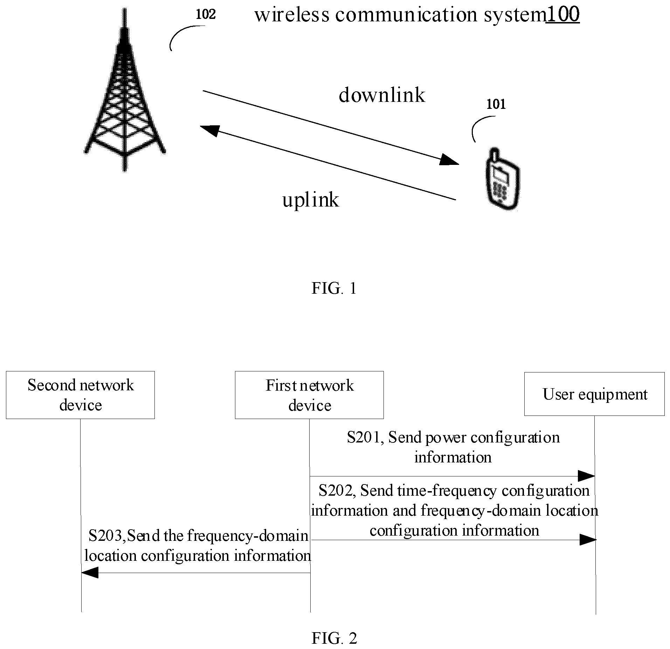

As shown in FIG. 1, an embodiment of the present disclosure provides a method for transmitting power information of a low-power wake-up signal that can be applied to a wireless communication system 100. The wireless communication system may include, but is not limited to, a network device 101 and a user device 102. The user device 102 is configured to support carrier aggregation and may be connected to a plurality of carrier units of the network device 101, including a primary carrier unit and one or more secondary carrier units.

It should be understood that the above wireless communication system 100 may be applicable to low-frequency scenarios as well as high-frequency scenarios. The application scenarios of the wireless communication system 100 include, but are not limited to, a long term evolution (LTE) system, an LTE frequency division duplex (FDD) system, an LTE time division duplex (TDD) system, a worldwide interoperability for micro wave access (WiMAX) communication system, a cloud radio access network (CRAN) communication system, a future 5th-generation (5G) system, a new radio (NR) communication system, or a future evolved public land mobile network (PLMN) system, etc.

The user device 102 shown above may be a user equipment (UE), a terminal, an access terminal, a terminal unit, a terminal station, a mobile station (MS), a remote station, a remote terminal, a mobile terminal, a wireless communication device, a terminal agent, or a user device, etc. The user device 102 may have a wireless transceiver function, which is capable of communicating (e.g., wirelessly) with one or more network devices 101 of one or more communication systems and accepting network services provided by the network devices 101, which herein include, but are not limited to, the base station as shown in figures.

The user device 102 may be a cellular phone, a cordless phone, a session initiation protocol (SIP) phone, a wireless local loop (WLL) station, a personal digital assistant (PDA) device, a handheld device with wireless communication capabilities, a computing device, other processing devices connected to wireless modems, an in-vehicle device, a wearable device, a user device in a future 5G network or in a future evolved PLMN network, and so on.

The network device 101 may be an access network device (or an access network site). The access network device refers to a device that has the function of providing network access, such as a radio access network (RAN) base station and the like. The network device may specifically include a base station (BS) device, or may include a base station device and a wireless resource management device used to control the base station device. The network device may also include a relay station (a relay device), an access point, a base station in the future 5G network, a base station in the future evolved PLMN network, or a NR base station, and the like. The network device may be a wearable device or an in-vehicle device. The network device may also be a communication chip having a communication module.

For example, the network device 101 includes, but is not limited to, a next-generation base station (gnodeB, gNB) in a 5G system, an evolved node B (eNB) in an LTE system, a radio network controller (RNC), a node B (NB) in a WCDMA system, a radio controller or a base station controller (BSC) under a CRAN system, a base transceiver station (BTS) in a GSM system or a CDMA system, a home base station (e.g., home evolved nodeB, or home node B, HNB), a baseband unit (BBU), a transmitting and receiving point (TRP), a transmitting point (TP), or mobile switching center, etc.

An embodiment of the present disclosure provides a method for transmitting power information of a low-power wake-up signal. FIG. 2 is a flowchart of a method for transmitting power information of a low-power wake-up signal illustrated according to an exemplary embodiment. As shown in FIG. 2, the method includes steps S201 to S203, specifically:
Step S201, sending, by a first network device, power configuration information to a user device.

The power configuration information sent by the first network device to the user device is used to indicate power information for a low-power wake-up signal, where the low-power wake-up signal is received by a set receiver of the user device. In an example, this set receiver can be referred to as an LPWUS receiver.

When the user device receives the power configuration information for the low-power wake-up signal, it is informed of the power information of the low-power wake-up signal to be received by the LPWUS receiver.

In some possible implementations, the low-power wake-up signal is a low-power wake-up signal that the first network device has performed power enhancement.

In some possible implementations, the first network device sends the power configuration information to the user device in such a way that the first network device sends a dedicated signaling to the user device, where the dedicated signaling includes the power configuration information for the low-power wake-up signal.

In some possible implementations, the first network device sends the power configuration information to the user device in such a way that the first network device broadcasts a system message, where the system message includes the power configuration information for the low-power wake-up signal.

In some possible implementations, the power information is a power offset of the low-power wake-up signal with respect to a synchronization signal block (SSB), i.e., SS/PBCH block.

For example, the power of the low-power wake-up signal is Pa, and the power of the SSB is Pb. Thus, the power offset of the low-power wake-up signal with respect to the SSB is Pc, and Pc equals Pa minus Pb (Pa-Pb).

In some possible implementations, the power information is a positive difference between the power of the low-power wake-up signal and the power of the SSB (SS/PBCH block), the power of the low-power wake-up signal being greater than the power of the SSB.

For example, the power of the low-power wake-up signal is P1, and the power of the SSB is P2. Thus, the positive difference between the power of the low-power wake-up signal and the power of the SSB is P3, the value of P3 is positive, and the value of P3 equals P1 minus P2 (P1-P2).

The power of the wake-up signal indicated by the power configuration information is greater than the power of the SSB, which can overcome the problem of a small coverage area of the LPWUS receiver due to the sensitivity of the LPWUS receiver being lower than that of the main receiver, effectively increase the coverage area of the wake-up signal used for the LPWUS receiver, and improve the coverage performance of this wake-up signal.

Step S202, sending, by the first network device, time-domain configuration information and frequency-domain position configuration information to the user device.

The time-domain configuration information includes information for indicating a number of repeated transmissions of the low-power wake-up signal.

In some possible implementations, the plurality of repetitions of the low-power wake-up signal are continuous in the time domain, i.e., the same low-power wake-up signal is sent multiple times in continuous time-domain positions.

The repeated transmissions of the low-power wake-up signal in the time domain can overcome the problem of the small coverage area of the wake-up signal of the LPWUS receiver due to the lower sensitivity of the LPWUS receiver than that of the main receiver.

Moreover, the repeated transmissions of the low-power wake-up signal can serve the purpose of sending diversity as well as enhancing the signal strength at the receiving end. The more times the wake-up signal is repeated, the better the reception effect of the LPWUS receiver for the wake-up signal.

The plurality repetitions of the low-power wake-up signal are continuous in the time domain, which can allow the LPWUS receiver to quickly complete the reception of the low-power wake-up signal. In addition, the channels experienced by these repeated low-power wake-up signals are more similar, which facilitates the combined reception of the low-power wake-up signal as compared to the case where the plurality of repetitions of the low-power wake-up signal are dispersed in the time domain.

It should be noted that the LP WUS receiver does not necessarily need to fully receive all the configured low-power wake-up signals after repetitions. For example, if a base station configures 16 repetitions for a low-power wake-up signal, and the LP WUS receiver of UE has already detected the low-power wake-up signal at the 10th repetition position, the LPWUS receiver does not need to receive the remaining six repeated low-power wake-up signals.

In an example, the first network device broadcasts a system message, where the system message includes the power configuration information for the low-power wake-up signal, and the time-domain configuration information for the low-power wake-up signal.

In an example, the first network device broadcasts two system messages, where one of the system messages includes the power configuration information for the low-power wake-up signal, and the other one includes the time-domain configuration information for the low-power wake-up signal.

The frequency-domain position configuration information is used to indicate a frequency-domain position of the low-power wake-up signal.

In an example, the first network device broadcasts a system message, where the system message includes the power configuration information, the time-domain configuration information, and the frequency-domain position configuration information for the low-power wake-up signal.

In an example, the first network device broadcasts three system messages, where one of the system messages includes the power configuration information for the low-power wake-up signal, another system message includes the time-domain configuration information for the low-power wake-up signal, and the remaining system message includes the frequency-domain position configuration information for the low-power wake-up signal.

In some possible implementations, when the low-power wake-up signal is sent periodically, the first network device sends time-domain period information to the user device, where the time-domain period information is used to indicate a sending period of the low-power wake-up signal in the time domain.

Step S203, sending, by the first network device, the frequency-domain position configuration information to a second network device.

The frequency-domain position configuration information is used to indicate a frequency-domain position of the low-power wake-up signal.

In some possible implementations, a cell managed by the second network device is a neighboring cell to a cell managed by the first network device.

In the embodiments of the present disclosure, the first network device sends power configuration information for a low-power wake-up signal corresponding to the LPWUS receiver of the user device to the user device, so that the user device is informed of the power configuration status of the low-power wake-up signal corresponding to the LPWUS receiver. This allows the user device to determine, based on this power configuration information and the known sensitivity of the LPWUS receiver, the timing to turn on the LPWUS receiver when the main receiver is in the operating state, which enables the user device to more accurately control the turning on and off of the main receiver and the LPWUS receiver, thereby saving the power consumption of the user device.

In addition, the first network device sends the frequency-domain position configuration information of the low-power wake-up signal to the second network device, which can avoid interference between cells. Specifically, the first network device enhances the power of the low-power wake-up signal corresponding to the LPWUS receiver of the user device in the cell it manages. This may later cause interference to other neighbor cells. Thus, it is necessary to notify the network device of other cells, i.e., the second network device, of the frequency-domain position configuration information of the low-power wake-up signal, so that the second network device can avoid the frequency-domain position of this low-power wake-up signal when it performs scheduling, thereby avoiding inter-cell interference.

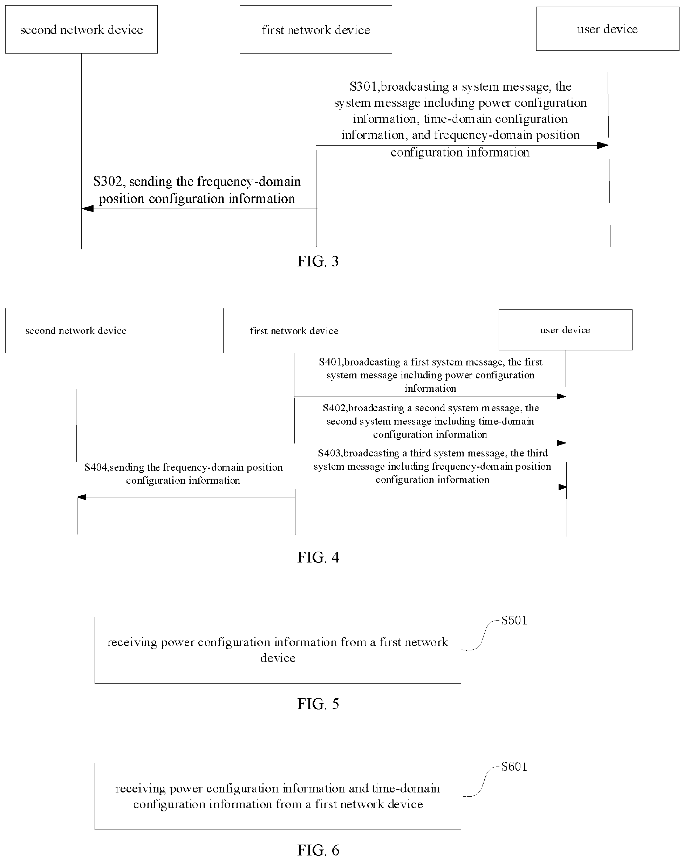

An embodiment of the present disclosure provides a method for transmitting power information of a low-power wake-up signal. FIG. 3 is a flowchart of a method for transmitting power information of a low-power wake-up signal illustrated according to an exemplary embodiment. As shown in FIG. 3, the method includes steps S301 to S302, specifically:
Step S301, broadcasting, by a first network device, a system message, where the system message includes power configuration information, time-domain configuration information, and frequency-domain position configuration information.

The power configuration information is used to indicate power information for a low-power wake-up signal, where the low-power wake-up signal is received by a set receiver of a user device. In an example, this set receiver can be referred to as an LPWUS receiver.

The time-domain configuration information is used to indicate information about the number of repeated transmissions of the low-power wake-up signal.

The frequency-domain position configuration information is used to indicate a frequency-domain position of the low-power wake-up signal.

Step S302, sending, by the first network device, the frequency-domain position configuration information to a second network device.

In some possible implementations, a cell managed by the second network device is a neighboring cell to a cell managed by the first network device.

An embodiment of the present disclosure provides a method for transmitting power information of a low-power wake-up signal. FIG. 4 is a flowchart of a method for transmitting power information of a low-power wake-up signal illustrated according to an exemplary embodiment. As shown in FIG. 4, the method includes steps S401 to S404, specifically:
Step S401, broadcasting, by a first network device, a first system message, where the first system message includes power configuration information.

The power configuration information is used to indicate power information for a low-power wake-up signal, where the low-power wake-up signal is received by a set receiver of a user device. In an example, this set receiver can be referred to as a LPWUS receiver.

Step S402, broadcasting, by the first network device, a second system message, where the second system message includes time-domain configuration information.

The time-domain configuration information is used to indicate information about the number of repeated transmissions of the low-power wake-up signal.

Step S403, broadcasting, by the first network device, a third system message, where the third system message includes frequency-domain position configuration information.

The frequency-domain position configuration information is used to indicate a frequency-domain position of the low-power wake-up signal.

Step S404, sending, by the first network device, the frequency-domain position configuration information to a second network device.

In some possible implementations, a cell managed by the second network device is a neighboring cell to a cell managed by the first network device.

It should be noted that the order of "sending" in the steps S401, S402, S403, and S404 is not limited to the sequence shown in FIG. 4. These steps S401, S402, S403, and 5404 can be performed in any order.

An embodiment of the present disclosure provides a method for receiving power information of a low-power wake-up signal, which is performed by a user device. FIG. 5 is a flowchart of a method for receiving power information of a low-power wake-up signal illustrated according to an exemplary embodiment. As shown in FIG. 5, the method includes a step S501, specifically:
Step S501, receiving power configuration information from a first network device.

The power configuration information is used to indicate power information for a low-power wake-up signal, where the low-power wake-up signal is received by a set receiver of the user device. In an example, this set receiver can be referred to as a LPWUS receiver.

In some possible implementations, receiving the power configuration information from the first network device includes: receiving a dedicated signaling from the first network device, where the dedicated signaling includes the power configuration information.

In some possible implementations, receiving the power configuration information from the first network device includes: receiving a system message broadcast by the first network device, where the system message includes the power configuration information.

In some possible implementations, the power information is a power offset of the low-power wake-up signal with respect to a synchronization signal block (SSB).

For example, the power of the low-power wake-up signal is Pa, and the power of the SSB is Pb. Thus, the power offset of the low-power wake-up signal with respect to the SSB is Pc, and Pc equals Pa minus Pb (Pa-Pb).

In some possible implementations, the power information is a positive difference between the power of the low-power wake-up signal and the power of the synchronization signal block (SSB), the power of the low-power wake-up signal being greater than the power of the SSB.

For example, the power of the low-power wake-up signal is P1, and the power of the SSB is P2. Thus, the positive difference between the power of the low-power wake-up signal and the power of the SSB is P3, the value of P3 is positive, and the value of P3 equals P1 minus P2 (P1-P2).

In a specific example, the LPWUS receiver of the user device has a sensitivity of -80db. The user device turns on the main receiver while in a RRC idle state, and receives the SSB through the main receiver. The main receiver measures the Reference Signal Receiving Power (RSRP) of the received SSB. The user device receives a system message broadcast by the first network device, which indicates that the power of the LPWUS is 10db higher than the power of the SSB.

If the power of the SSB measured by the main receiver is -100db, the user device can determine, based on the system message, that the low-power wake-up signal received by the LPWUS receiver corresponds to receiving power of -90db, which does not reach the minimum receiving power of -80db for the LPWUS receiver, and thus the user device determines that it is not necessary to turn on the LPWUS receiver.

If the power of the SSB measured by the main receiver is -85db, the user device can determine, based on the system message, that the low-power wake-up signal received by the LPWUS receiver corresponds to receiving power of -75db, which has reached the minimum receiving power of -80db for the LPWUS receiver, and thus the user device determines that the LPWUS receiver needs to be turned on.

The power of the wake-up signal, indicated by the power configuration information, is greater than the power of the SSB, which can overcome the problem of a small coverage area of the LPWUS receiver due to the sensitivity of the LPWUS receiver being lower than that of the main receiver, effectively increase the coverage area of the wake-up signal used for the LPWUS receiver, and improve the coverage performance of this wake-up signal.

An embodiment of the present disclosure provides a method for receiving power information of a low-power wake-up signal, which is performed by a user device. FIG. 6 is a flowchart of a method for receiving power information of a low-power wake-up signal illustrated according to an exemplary embodiment. As shown in FIG. 6, the method includes a step S601, specifically:
Step S601, receiving power configuration information and time-domain configuration information from a first network device.

The time-domain configuration information includes information for indicating the number of repeated transmissions of the low-power wake-up signal.

In some possible implementations, the plurality of repetitions of the low-power wake-up signal are continuous in the time domain, i.e., the same low-power wake-up signal is sent multiple times in continuous time-domain positions.

The repeated transmissions of the low-power wake-up signal in the time domain can overcome the problem of the small coverage area of the wake-up signal of the LPWUS receiver due to the lower sensitivity of the LPWUS receiver than that of the main receiver.

Moreover, the repeated transmissions of the wake-up signal can serve the purpose of sending diversity as well as enhancing the signal strength at the receiving end. The more times the wake-up signal is repeated, the better the reception effect of the LPWUS receiver for the wake-up signal.

The plurality repetitions of the low-power wake-up signal are continuous in the time domain, which can allow the LP WUS receiver to quickly complete the reception of the low-power wake-up signal. In addition, the channels experienced by these repeated low-power wake-up signals are more similar, which facilitates the combined reception of the low-power wake-up signal as compared to the case where the plurality of repetitions of the low-power wake-up signal are dispersed in the time domain.

It should be noted that the LP WUS receiver does not necessarily need to fully receive all the configured low-power wake-up signals after repetitions. For example, if a base station configures 16 repetitions for a low-power wake-up signal, and the LP WUS receiver of UE has already detected the low-power wake-up signal at the 10th repetition position, the LPWUS receiver does not need to receive the remaining six repeated low-power wake-up signals.

In some possible implementations, receiving the power configuration information and the time-domain configuration information from the first network device includes: receiving a system message broadcast by the first network device, where the system message includes the power configuration information and the time-domain configuration information.

In some possible implementations, receiving the power configuration information and the time-domain configuration information from the first network device includes: receiving a first system message broadcast by the first network device, where the first system message includes the power configuration information; and receiving a second system message broadcast by the first network device, where the second system message includes the time-domain configuration information.

In some possible implementations, receiving the power configuration information and the time-domain configuration information from the first network device includes: receiving a second system message broadcast by the first network device, where the second system message includes the power configuration information; and receiving a first system message broadcast by the first network device, where the first system message includes the time-domain configuration information.

In a specific example, the LPWUS receiver of the user device has a sensitivity of -80dBm. The user device turns on the main receiver while in a RRC idle state, and receives the SSB through the main receiver. The main receiver measures the Reference Signal Receiving Power (RSRP) of the received SSB. The user device receives a system message broadcast by the first network device. The system message indicates that the power offset of the power of the LPWUS compared to the power of the SSB is +12dB, i.e., the power of the LPWUS is 12dB higher than the power of the SSB. The system message also indicates that the number of repetitions of the low-power wake-up signal is 4, where the number of repetitions corresponds to a repetition gain of 6dB.

If the power of the SSB measured by the main receiver is -100dBm, the user device can determine, based on the system message, that the low-power wake-up signal received by the LPWUS receiver corresponds to receiving power of -82dBm (obtained from -100dBm + 12dB + 6dB), which does not reach the minimum receiving power of -80dBm for the LPWUS receiver, and thus the user device determines that it is not necessary to turn on the LPWUS receiver.

If the power of the SSB measured by the main receiver is -95dBm, the user device can determine, based on the system message, that the low-power wake-up signal received by the LPWUS receiver corresponding receiving power of -77dBm (obtained from -95dBm + 12dB + 6dB), which has reached the minimum receiving power of -80dBm for the LPWUS receiver, and thus the user device determines that the LPWUS receiver needs to be turned on.

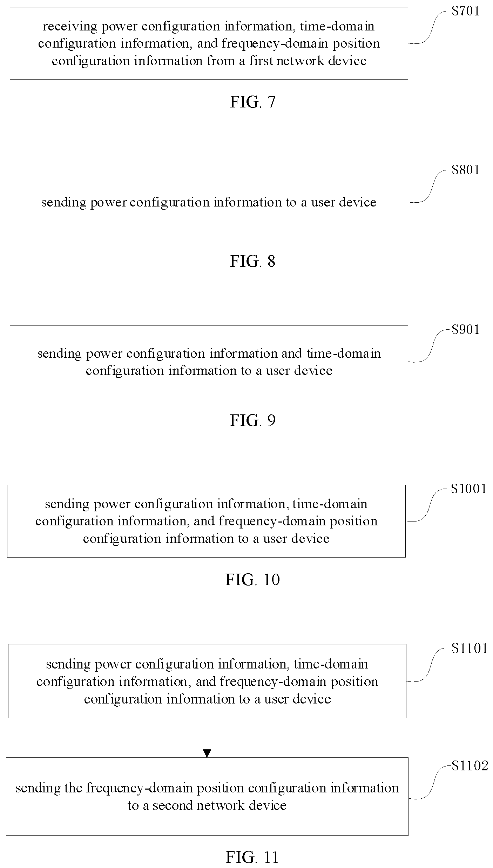

An embodiment of the present disclosure provides a method for receiving power information of a low-power wake-up signal, which is performed by a user device. FIG. 7 is a flowchart of a method for receiving power information of a low-power wake-up signal illustrated according to an exemplary embodiment. As shown in FIG. 7, the method includes a step S701, specifically:
Step S701, receiving power configuration information, time-domain configuration information, and frequency-domain position configuration information from a first network device.

The frequency-domain position configuration information is used to indicate a frequency-domain position of the low-power wake-up signal.

In some possible implementations, receiving the power configuration information, the time-domain configuration information, and the frequency-domain position configuration information from the first network device includes: receiving a system message broadcast by the first network device, where the system message includes the power configuration information, the time-domain configuration information, and the frequency-domain position configuration information.

In some possible implementations, receiving the power configuration information, the time-domain configuration information, and the frequency-domain position configuration information from the first network device includes: receiving a first system message broadcast by the first network device, where the first system message includes the power configuration information; receiving a second system message broadcast by the first network device, where the second system message includes the time-domain configuration information; and receiving a third system message broadcast by the first network device, where the third system message includes the frequency-domain position configuration information. There is no limitation on the correspondence between the first system message, the second system message and the third system message, and the power configuration information, the time-domain configuration information and the frequency-domain position configuration information.

In some possible implementations, when the low-power wake-up signal is sent periodically, time-domain period information sent by the first network device is received, where the time-domain period information is used to indicate a sending period of the low-power wake-up signal in the time domain.

An embodiment of the present disclosure provides a method for sending power information of a low-power wake-up signal, which is performed by a first network device. FIG. 8 is a flowchart of a method for sending power information of a low-power wake-up signal illustrated according to an exemplary embodiment. As shown in FIG. 8, the method includes a step S801, specifically:
Step S801, sending power configuration information to a user device.

The power configuration information is used to indicate power information for a low-power wake-up signal, where the low-power wake-up signal is received by a set receiver of the user device. In an example, this set receiver can be referred to as a LPWUS receiver.

In some possible implementations, sending the power configuration information to the user device includes: sending a dedicated signaling to the user device, where the dedicated signaling includes the power configuration information.

In some possible implementations, sending the power configuration information to the user device includes: broadcasting a system message, where the system message includes the power configuration information.

In some possible implementations, the power information is a power offset of the low-power wake-up signal with respect to a synchronization signal block (SSB).

For example, the power of the low-power wake-up signal is Pa, and the power of the SSB is Pb. Thus, the power offset of the low-power wake-up signal with respect to the SSB is Pc, and Pc equals Pa minus Pb (Pa-Pb).

In some possible implementations, the power information is a positive difference between the power of the low-power wake-up signal and the power of the SSB, the power of the low-power wake-up signal being greater than the power of the SSB.

For example, the power of the low-power wake-up signal is P1, and the power of the SSB is P2. Thus, the positive difference between the power of the low-power wake-up signal and the power of the SSB is P3, the value of P3 is positive, and the value of P3 equals P1 minus P2 (P1-P2).

The power of the wake-up signal indicated by the power configuration information is greater than the power of the SSB, which can overcome the problem of a small coverage area of the LPWUS receiver due to the sensitivity of the LPWUS receiver being lower than that of the main receiver, effectively increase the coverage area of the wake-up signal used for the LPWUS receiver, and improve the coverage performance of this wake-up signal.

An embodiment of the present disclosure provides a method for sending power information of a low-power wake-up signal, which is performed by a first network device. FIG. 9 is a flowchart of a method for sending power information of a low-power wake-up signal illustrated according to an exemplary embodiment. As shown in FIG. 9, the method includes a step S901, specifically:
Step S901, sending power configuration information and time-domain configuration information to a user device.

The time-domain configuration information includes information for indicating the number of repeated transmissions of the low-power wake-up signal.

In some possible implementations, the plurality of repetitions of the low-power wake-up signal are continuous in the time domain, i.e., the same low-power wake-up signal is sent multiple times in continuous time-domain positions.

The repeated transmissions of the low-power wake-up signal in the time domain can overcome the problem of the small coverage area of the wake-up signal of the LPWUS receiver due to the lower sensitivity of the LPWUS receiver than that of the main receiver.

In addition, the repeated transmissions of the wake-up signal can serve the purpose of sending diversity as well as enhancing the signal strength at the receiving end. The more times the wake-up signal is repeated, the better the reception effect of the LP WUS receiver for the wake-up signal.

The plurality repetitions of the low-power wake-up signal are continuous in the time domain, which can allow the LP WUS receiver to quickly complete the reception of the low-power wake-up signal. In addition, the channels experienced by these repeated low-power wake-up signals are more similar, which facilitates the combined reception of the low-power wake-up signal as compared to the case where the plurality of repetitions of the low-power wake-up signal are dispersed in the time domain.

It should be noted that the LP WUS receiver does not necessarily need to fully receive all the configured low-power wake-up signals after repetitions. For example, if a base station configures 16 repetitions for a low-power wake-up signal, and the LP WUS receiver of UE has already detected the low-power wake-up signal at the 10th repetition position, the LP WUS receiver does not need to receive the remaining six repeated low-power wake-up signals.

In some possible implementations, sending the power configuration information and the time-domain configuration information to the user device includes: broadcasting a system message, where the system message includes the power configuration information and the time-domain configuration information, i.e., both power configuration information and time-domain configuration information are contained in the same system message.

In some possible implementations, sending the power configuration information and the time-domain configuration information to the user device includes: broadcasting a first system message, where the first system message includes the power configuration information; and broadcasting a second system message, where the second system message includes the time-domain configuration information.

In some possible implementations, sending the power configuration information and the time-domain configuration information to the user device includes: broadcasting a second system message, where the second system message includes the power configuration information; and broadcasting a first system message, where the first system message includes the time-domain configuration information.

An embodiment of the present disclosure provides a method for sending power information of a low-power wake-up signal, which is performed by a first network device. FIG. 10 is a flowchart of a method for sending power information of a low-power wake-up signal illustrated according to an exemplary embodiment. As shown in FIG. 10, the method includes a step S1001, specifically:
Step S1001, sending power configuration information, time-domain configuration information, and frequency-domain position configuration information to a user device.

The frequency-domain position configuration information is used to indicate a frequency-domain position of the low-power wake-up signal.

In some possible implementations, sending the power configuration information, the time-domain configuration information, and the frequency-domain position configuration information to the user device includes: broadcasting a system message, where the system message includes the power configuration information, the time-domain configuration information, and the frequency-domain position configuration information.

In some possible implementations, sending the power configuration information, the time-domain configuration information, and the frequency-domain position configuration information to the user device includes: broadcasting a first system message, where the first system message includes the power configuration information; broadcasting a second system message, where the second system message includes the time-domain configuration information; and broadcasting a third system message, where the third system message includes the frequency-domain position configuration information. There is no limitation on the correspondence between the first system message, the second system message and the third system message, and the power configuration information, the time-domain configuration information and the frequency-domain position configuration information.

In some possible implementations, when the low-power wake-up signal is sent periodically, time-domain period information sent by the first network device is received, where the time-domain period information is used to indicate a sending period of the low-power wake-up signal in the time domain.

An embodiment of the present disclosure provides a method for sending power information of a low-power wake-up signal, which is performed by a first network device. FIG. 11 is a flowchart of a method for sending power information of a low-power wake-up signal illustrated according to an exemplary embodiment. As shown in FIG. 11, the method includes steps S1101 to S 1102, specifically:
Step S1101, sending power configuration information, time-domain configuration information, and frequency-domain position configuration information to a user device.
Step S1102, sending the frequency-domain position configuration information to a second network device.

In some possible implementations, a cell managed by the second network device is a neighboring cell to a cell managed by the first network device.

In the embodiments of the present disclosure, the first network device sends the frequency-domain position configuration information of the low-power wake-up signal to the second network device, which can avoid interference between cells. Specifically, the first network device enhances the power of the low-power wake-up signal of the LPWUS receiver of the user device in the cell it manages. This may later cause interference to other neighbor cells. Thus, it is necessary to notify the network device of other cells, i.e., the second network device, of the frequency-domain position configuration information of the low-power wake-up signal, so that the second network device can avoid the frequency-domain position of this low-power wake-up signal when it performs scheduling, thereby avoiding inter-cell interference.

Based on the same concept as the above method embodiments, an embodiment of the present disclosure also provides a communication device that may have a function of the user device 102 in the above method embodiments and be used to perform the steps provided in the above embodiments to be performed by the user device 102. The function can be realized by hardware or can be realized by software or hardware executing corresponding software. The hardware or software includes one or more modules corresponding to the above-described function.

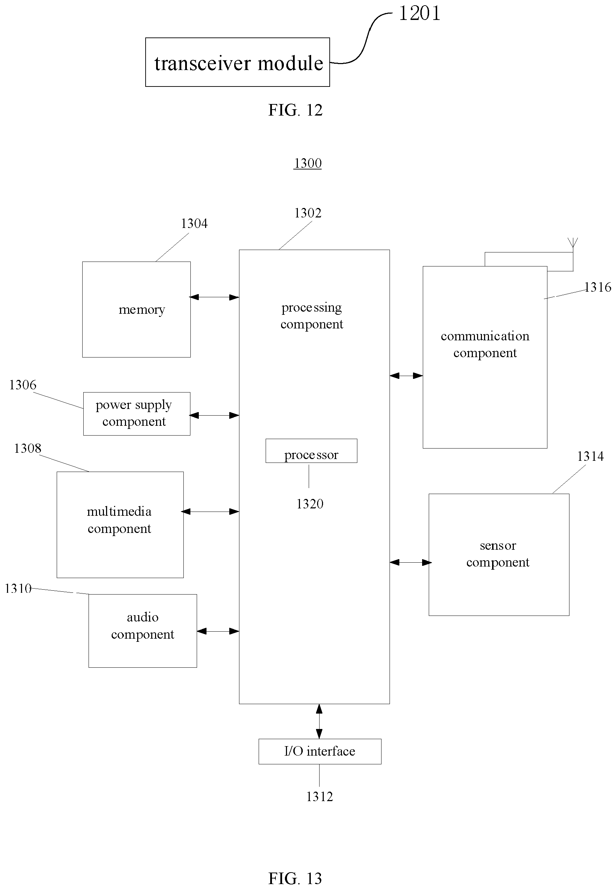

In one possible embodiment, the communication device 1200, as shown in FIG. 12, can serve as the user device 102 involved in the method embodiments described above, and perform the steps performed by the user device 102 in one method embodiment described above.

The communication device 1200 includes a transceiver module 1201.

The transceiver module 1201 is configured to receive power configuration information from a first network device, where the power configuration information is configured to indicate power information for a low-power wake-up signal, the low-power wake-up signal being received by a set receiver of the user device.

In some possible implementations, the transceiver module 1201 is further configured to receive a system message broadcast by the first network device, the system message including the power configuration information.

In some possible implementations, the power information is a power offset of the low-power wake-up signal with respect to a synchronization signal block (SSB).

In some possible implementations, the power information is a positive difference between power of the low-power wake-up signal and power of a synchronization signal block (SSB), the power of the low-power wake-up signal being greater than the power of the SSB.

In some possible implementations, the transceiver module 1201 is further configured to receive time-domain configuration information from the first network device, where the time-domain configuration information includes information for indicating a number of repeated transmissions of the low-power wake-up signal.

In some possible implementations, a plurality of repetitions of the low-power wake-up signal are continuous in time domain.

In some possible implementations, the transceiver module 1201 is further configured to receive frequency-domain position configuration information from the first network device, where the frequency-domain position configuration information is configured to indicate a frequency-domain position of the low-power wake-up signal.

When this communication device is the user device 102, its structure can also be shown in FIG. 13.

FIG. 13 is a block diagram of a device 1300 for transmitting power information of a low-power wake-up signal illustrated according to an exemplary embodiment. For example, the device 1300 may be a cell phone, a computer, a digital broadcast terminal, a message transceiver device, a game console, a tablet device, a medical device, a fitness device, a personal digital assistant, and the like.

Referring to FIG. 13, the device 1300 may include one or more of the following components: a processing component 1302, a memory 1304, a power supply component 1306, a multimedia component 1308, an audio component 1310, an input/output (I/O) interface 1312, a sensor component 1314, and a communication component 1316.

The processing component 1302 generally controls the overall operation of the device 1300, such as operations associated with display, telephone calling, data communication, camera operation, and recording operations. The processing component 1302 may include one or more processors 1320 to execute instructions to accomplish all or some of the steps of the method described above. In addition, the processing component 1302 may include one or more modules to facilitate interaction between the processing component 1302 and other components. For example, the processing component 1302 may include a multimedia module to facilitate interaction between the multimedia component 1308 and the processing component 1302.

The memory 1304 is configured to store various types of data to support operations at the device 1300. Examples of such data include instructions for any application or method operating on the device 1300, contact data, phone book data, messages, pictures, videos, etc. The memory 1304 may be implemented by any type of volatile or non-volatile storage device or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, disk or CD-ROM.

The power supply component 1306 provides power to various components of the device 1300. The power supply component 1306 may include a power management system, one or more power sources, and other components associated with generating, managing, and distributing power for the device 1300.

The multimedia component 1308 includes a screen providing an output interface between the device 1300 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touches, swipes and gestures on the touch panel. These touch sensors may not only sense the boundaries of a touch or swipe action, but also detect the duration and pressure associated with the touch or swipe operation. In some embodiments, the multimedia component 1308 includes a front camera and/or a rear camera. The front camera and/or the rear camera may receive external multimedia data when the device 1300 is in an operational mode, such as a shooting mode or a video mode. Each front camera and rear camera may be a fixed optical lens system or have a focal length and optical zoom capability.

The audio component 1310 is configured to output and/or input audio signals. For example, the audio component 1310 includes a microphone (MIC) configured to receive external audio signals when the device 1300 is in an operational mode, such as a call mode, a recording mode, and a voice recognition mode. The received audio signals may be further stored in memory 1304 or sent via communication component 1316. In some embodiments, the audio component 1310 further includes a speaker for outputting audio signals.

The I/O interface 1312 provides an interface between the processing component 1302 and a peripheral interface module. The peripheral interface module may be a keypad, a click wheel, a button, and the like. These buttons may include, but are not limited to: a home button, a volume button, a start button, and a lock button.

The sensor component 1314 includes one or more sensors for providing an assessment of various aspects of the status of the device 1300. For example, the sensor component 1314 may detect an open/closed state of the device 1300 and the relative positioning of components. These components are, for example, the display and keypad of the device 1300. The sensor component 1314 may also detect a change in the position of the device 1300 or of a component of the device 1300, the presence or absence of user contact with the device 1300, a change in the orientation of the device 1300 or acceleration/ deceleration and a change in temperature of the device 1300. The sensor component 1314 may include a proximity sensor configured to detect the presence of a nearby object in the absence of any physical contact. The sensor component 1314 may also include an optical sensor, such as a CMOS or CCD image sensor, for use in imaging applications. In some embodiments, the sensor component 1314 may also include an acceleration sensor, a gyroscope sensor, a magnetic sensor, a pressure sensor, or a temperature sensor.

The communication component 1316 is configured to facilitate communication between the device 1300 and other devices by wired or wireless means. The device 1300 may access a wireless network based on a communication standard, such as Wi-Fi, 4G or 5G, or a combination thereof. In an exemplary embodiment, the communication component 1316 receives broadcast signals or broadcast-related information from an external broadcast management system via a broadcast channel. In an exemplary embodiment, the communication component 1316 further includes a near field communication (NFC) module to facilitate short range communication. For example, the NFC module may be implemented based on Radio Frequency Identification (RFID) technology, Infrared Data Association (IrDA) technology, Ultra Wide Band (UWB) technology, Bluetooth^{®} (BT) technology and other technologies.

In exemplary embodiments, the device 1300 may be implemented by one or more application-specific integrated circuits (ASICs), digital signal processors (DSPs), digital signal processing devices (DSPDs), programmable logic devices (PLDs), field-programmable gate arrays (FPGAs), controllers, microcontrollers, microprocessors, or other electronic components for performing the methods described above.

In exemplary embodiments, there is also provided a non-transitory computer-readable storage medium including instructions, such as a memory 1304 including instructions, the instructions being executable by a processor 1320 of the device 1300 to accomplish the methods described above. For example, the non-transitory computer-readable storage medium may be ROM, random access memory (RAM), CD-ROM, magnetic tape, floppy disks, and optical data storage devices, among others.

Based on the same concept as the above method embodiments, an embodiment of the present disclosure also provides a communication device that may have the function of the network device 101 in the above method embodiments and be used to perform the steps provided in the above embodiments to be performed by the network device 101. The function may be realized through hardware or through software or hardware executing corresponding software. The hardware or software includes one or more modules corresponding to the above-described function.

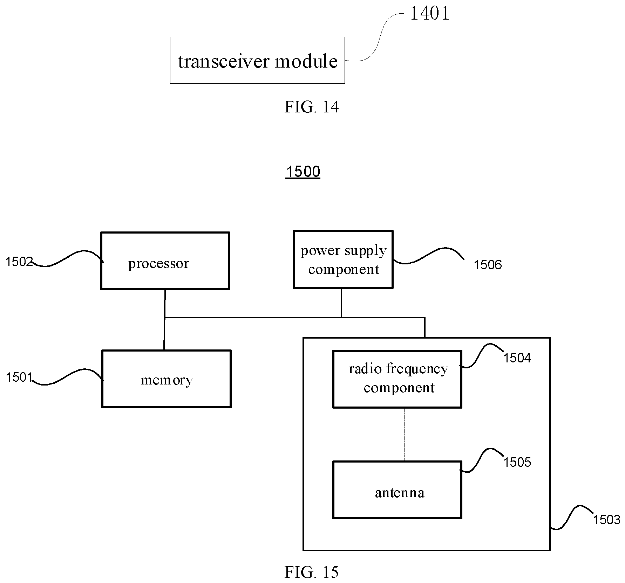

In one possible implementation, the communication device 1400 as shown in FIG. 14 may serve as the network device 101 involved in the above method embodiments and perform the steps performed by the network device 101 in the above method embodiments.

The communication device 1400 as shown in FIG. 14 includes a transceiver module 1401.

The transceiver module 1401 is configured to send power configuration information to a user device, where the power configuration information is configured to indicate power information for a low-power wake-up signal, the low-power wake-up signal being received by a set receiver of the user device,

In some possible implementations, the transceiver module 1401 is further configured to broadcast a system message, the system message including the power configuration information.

In some possible implementations, the power information is a power offset of the low-power wake-up signal with respect to a synchronization signal block (SSB).

In some possible implementations, the power information is a positive difference between power of the low-power wake-up signal and power of a synchronization signal block (SSB), the power of the low-power wake-up signal being greater than the power of the SSB.

In some possible implementations, the transceiver module 1401 is further configured to send time-domain configuration information to the user device, where the time-domain configuration information includes information for indicating a number of repeated transmissions of the low-power wake-up signal.

In some possible implementations, a plurality of repetitions of the low-power wake-up signal are continuous in time domain.

In some possible implementations, the transceiver module 1401 is further configured to send frequency-domain position configuration information to the user device, where the frequency-domain position configuration information is configured to indicate a frequency-domain position of the low-power wake-up signal.

In some possible implementations, the transceiver module 1401 is further configured to send the frequency-domain position configuration information to a second network device.

When the communication device is a network device, its structure may also be shown in FIG. 15. The structure of the communication device is illustrated using the network device 101 as a base station as an example. As shown in FIG. 15, the device 1500 includes a memory 1501, a processor 1502, a transceiver component 1503, and a power supply component 1506. The memory 1501 is coupled to the processor 1502 and may be used to store programs and data necessary for the communication device 1500 to implement various functions. The processor 1502 is configured to support the communication device 1500 in performing the corresponding function in the methods described above, and this function may be realized by calling a program stored in the memory 1501. The transceiver component 1503 may be a wireless transceiver that may be used to support the communication device 1500 in performing receiving signaling and/or data, and transmitting signaling and/or data, over a wireless air port. The transceiver component 1503 may also be referred to as a transceiver unit or a communication unit, and the transceiver component 1503 may include an radio frequency (RF) component 1504 and one or more antennas 1505. The RF component 1504 may be a remote radio unit (RRU), which may be used specifically for transmission of RF signals and conversion of RF signals to baseband signals. The one or more antennas 1505 may be specifically used to perform radiation and reception of RF signals.

When the communication device 1500 needs to send data, the processor 1502 may output a baseband signal to the radio frequency unit after baseband processing of the data to be sent, and the radio frequency unit will send the radio frequency signal through the antenna in the form of electromagnetic waves after radio frequency processing of the baseband signal. When there is data sent to the communication device 1500, the radio frequency unit receives the radio frequency signal through the antenna, converts the radio frequency signal to a baseband signal, and outputs the baseband signal to the processor 1502, which converts the baseband signal to data and processes the data.

Other embodiments of the present disclosure will readily be conceived by those skilled in the art upon consideration of the specification and practice of the invention disclosed herein. The present application is intended to cover any variations, uses, or adaptations of the embodiments of the present disclosure that follow the general principles of the embodiments of the present disclosure and include common knowledge or customary technical means in the art not disclosed herein. The specification and embodiments are to be regarded as exemplary only, and the true scope and spirit of the embodiments of the present disclosure are indicated by the following claims.

It should be understood that the embodiments of the present disclosure are not limited to the precise structure that has been described above and illustrated in the accompanying drawings, and are subject to various modifications and changes without departing from their scope. The scope of the embodiments of the present disclosure is limited only by the appended claims.

### Industrial Applicability

The first network device sends power configuration information for a low-power wake-up signal corresponding to the LPWUS receiver of the user device to the user device, so that the user device is informed of the power configuration status of the low-power wake-up signal corresponding to the LPWUS receiver. This allows the user device to determine, based on this power configuration information and the known sensitivity of the LPWUS receiver, the timing to turn on the LPWUS receiver when the main receiver is in the operating state, which enables the user device to more accurately control the turning on and off of the main receiver and the LPWUS receiver, thereby saving the power consumption of the user device. In addition, when the power of the wake-up signal is greater than the power of the SSB, it can overcome the problem of a small coverage area of the LPWUS receiver due to the sensitivity of the LPWUS receiver being lower than that of the main receiver, which effectively increases the coverage area of the wake-up signal for the LPWUS receiver and improves the coverage performance of the wake-up signal.

## Claims

1. A method for transmitting power information of a low-power wake-up signal, performed by a user device, the method comprising:
receiving power configuration information from a first network device, wherein the power configuration information is configured to indicate power information for a low-power wake-up signal, the low-power wake-up signal being received by a set receiver of the user device.

2. The method according to claim 1, wherein receiving the power configuration information from the first network device comprises:
receiving a system message broadcast by the first network device, the system message comprising the power configuration information.

3. The method according to claim 1, wherein
the power information is a power offset of the low-power wake-up signal with respect to a synchronization signal block, SSB.

4. The method according to claim 1, wherein
the power information is a positive difference between power of the low-power wake-up signal and power of a synchronization signal block, SSB, the power of the low-power wake-up signal being greater than the power of the SSB.

5. The method according to any one of claims 1 to 4, further comprising:
receiving time-domain configuration information from the first network device, wherein the time-domain configuration information comprises information for indicating a number of repeated transmissions of the low-power wake-up signal.

6. The method according to claim 5, wherein
a plurality of repetitions of the low-power wake-up signal are continuous in time domain.

7. The method according to claim 1, further comprising:
receiving frequency-domain position configuration information from the first network device, wherein the frequency-domain position configuration information is configured to indicate a frequency-domain position of the low-power wake-up signal.

8. A method for transmitting power information of a low-power wake-up signal, performed by a first network device, the method comprising:
sending power configuration information to a user device, wherein the power configuration information is configured to indicate power information for a low-power wake-up signal, the low-power wake-up signal being received by a set receiver of the user device.

9. The method according to claim 8, wherein sending the power configuration information to the user device comprises:
broadcasting a system message, the system message comprising the power configuration information.

10. The method according to claim 8, wherein
the power information is a power offset of the low-power wake-up signal with respect to a synchronization signal block, SSB.

11. The method according to claim 8, wherein
the power information is a positive difference between power of the low-power wake-up signal and power of a synchronization signal block, SSB, the power of the low-power wake-up signal being greater than the power of the SSB.

12. The method according to any one of claims 8 to 11, further comprising:
sending time-domain configuration information to the user device, wherein the time-domain configuration information comprises information for indicating a number of repeated transmissions of the low-power wake-up signal.

13. The method according to claim 12, wherein
a plurality of repetitions of the low-power wake-up signal are continuous in time domain.

14. The method according to claim 8, further comprising:
sending frequency-domain position configuration information to the user device, wherein the frequency-domain position configuration information is configured to indicate a frequency-domain position of the low-power wake-up signal.

15. The method according to claim 14, further comprising:
sending the frequency-domain position configuration information to a second network device.

16. A device for transmitting synchronization information and power information, configured in a user device, the device comprising:
a transceiver module configured to receive power configuration information from a first network device, wherein the power configuration information is configured to indicate power information for a low-power wake-up signal, the low-power wake-up signal being received by a set receiver of the user device.

17. A device for transmitting synchronization information and power information, configured in a first network device, the device comprising:
a transceiver module configured to send power configuration information to a user device, wherein the power configuration information is configured to indicate power information for a low-power wake-up signal, the low-power wake-up signal being received by a set receiver of the user device.

18. A communication device comprising a processor, and a memory, wherein
the memory is configured to store a computer program; and
the processor is configured to execute the computer program to implement the method according to any one of claims 1-7.

19. A communication device comprising a processor, and a memory, wherein
the memory is configured to store a computer program; and
the processor is configured to execute the computer program to implement the method according to any one of claims 8-15.

20. A computer-readable storage medium, the computer-readable storage medium having stored therein instructions which, when the instructions are invoked for execution on a computer, cause the computer to perform the method according to any one of claims 1-7.

21. A computer-readable storage medium, the computer-readable storage medium having stored therein instructions which, when the instructions are invoked for execution on a computer, cause the computer to perform the method according to any one of claims 8-15.
